# EUROPEAN PATENT APPLICATION

(11) **EP 0 667 281 A1**
(43) Date of publication of application: **16.08.1995**
(21) Application number: 95200311.9
(22) Date of filing: 08.02.1995
(51) Int. Cl.: B62K 21/22, B62K 3/10, B62K 3/02

(54) **Frame with standardized configuration for two-wheel bicycles**

(30) Priority: 10.02.1994 IT MI940235
(71) Applicant: M.& M. S.r.l., I-20015 Parabiago (Milano) (IT)
(72) Inventor: Mascetti, Sergio, I-21020 Monvalle. Varese (IT); Mattioni, Claudio, I-20015 Parabiago. Milano (IT); Caimi, Marco Giuseppe, I-20022 Castano Primo. Milano (IT)
(74) Representative: Appoloni, Romano

(57) **Abstract**

Standardized-configuration frame (10) for two-wheel bicycle, with which a seat post (16) and a handle-bar stem (18) are coupled according to respective sliding axes (20,21), in which the axis (20) of seat post (16) sliding relatively to the frame (10), and the axis (21) of handle-bar stem (18) sliding relatively to the bicycle frame (10) are slanting in opposite directions relatively to each other, relatively to a perpendicular axis (22) to the normal plane of contact of both bicycle wheels with soil.

## Description

The present invention relates to a frame with standardized configuration, for two-wheel bicycles.

The frame surely is the most important element in a bicycle. In fact, it confers stiffness to whole bicycle structure, supports most loads thereof and distributes them, constitutes 85-90% by weight of the bicycle and greatly influences both the functionality and the aesthetics, in strict sense, of the bicycle.

Therefore, the configuration, and the nature, of the bicycle frame determine great changes in comfort, handleability, safety and reliability of bicycle use. On the other hand, it is also one of the elements, the costs of which mostly contribute to the cost of whole bicycle.

Therefore, it is obvious that such an element is continuously being developed by bicycle manufacturers and that its shape, the number of components thereof, the nature of the materials it is manufactured from, as well as its manufacturing technique are being continuously changed and improved.

Although the configuration of a frame may be widely variable, some elements can anyway be always found in it which, although they may vary as to their size, shape and structure, are present in all frames and perform a same function in each of them.

In particular, the following can be distinguished:
-- an element (referred to as "seat tube") which connects the crankset to the seat assembly;
-- an element (referred to as "oblique tube") which connects the crankset to the front fork, and a second element, referred to as "head tube";
-- a front fork which, at an end thereof engages the hub of the front wheel ("front hub") and, at the other end thereof, is oriented towards the oblique tube and the head tube;
-- the head tube which, at its free end, receives the handle-bar stem.

All the other elements which compose the bicycle are connected with the frame. In particular, on said frame and, more precisely, on said seat tube, the seat assembly is fastened, and inside the head tube, the handle-bar is slidingly inserted through the handle-bar stem.

The seat assembly is supported on the seat tube by means of a seat post with which the seat is integrally linked, which seat post may slide inside said seat tube. The direction of movement of said seat assembly relatively to the whole frame is consequently constrained by the position of the seat tube in space. In a totally similar way, the relative movement of the handle-bar relatively to the frame is constrained to the position of said head tube in space.

In the following, in order to define the arrangement of bicycle frame elements in space, reference will be made to a reference axis having the following characteristics: said reference axis lays on the plane which contains the frame and results to be perpendicular to the line defined by the two points at which both bicycle wheels rest on soil. On the contrary, defining the horizontal coordinate of the position of this axis is not important; for the sake of convenience, we will assume that said axis runs through the crank axle. Such an axis will be referred to hereinunder as the "vertical reference axis".

Relatively to this vertical reference axis, each component of the bicycle frame will result to be slanting at an angle which will be calculated by starting from said vertical reference axis and moving in counterclockwise direction until meeting said frame component, or a hypothetical rectilinear extention thereof. Should such an angle be larger than 900, its complementary angle to 360 will be taken, and a negative value will be assigned to it.

The normally available bicycle frames from the market have their seat tube slanting at a positive angle (as computed as specified hereinabove), generally comprised within the range of from 20 to 400. As regards the head tube, on the contrary, it is often a simple extention of the terminal portion of the front fork, of which it retains, practically unchanged, the direction. Inasmuch as the hub of the front wheel is the foremost element of bicycle frame, the front fork results to be surely slanting at a positive angle relatively to said vertical reference axis, and, consequently, also the head tube displays a positive slant angle relatively to the vertical reference axis.

This arrangement inherently brings about a drawback. When in a bicycle according to the prior art the level of the seat and of the handle-bar is adjusted relatively to the frame, adjustment movements in the same vertical direction cause the seat and the handle-bar, respectively, to shift in the same direction in such a way that the mutual distance between both these elements remains practically unchanged.

This causes, e.g., a rearwards shift of cyclist barycentre, with a consequent negative effect on bicycle dynamics. A frame which results to be optimal for a bicyclist having a certain tallness is therefore not useable by a second person with a different tallness, by simply adjusting the level of the seat and of the handle-bar.

Therefore, to each different tallness of the bicyclist, a different size of frame must hence correspond. This requirement negatively mirrors on bicycle frame, and hence, bicycle manufacturing costs. The wide range of different models causes therefore drawbacks to bicycle manufacturers, distributors and end users.

The purpose of the present invention is to provide a bicycle frame structure which may obviate the above drawbacks which affect the prior art.

The object of the present invention is a two-wheel bicycle frame with standardized configuration with which a seat post and a handle-bar stem are slidingly and removably coupled, according to relevant sliding axes and, through an axle, a crankset is coupled, characterized in that the sliding axis of the seat tube relatively to the frame, and the sliding axis of the handle-bar stem relatively to the frame result to be slanting in opposite directions relatively to each other, to a perpendicular axis to the normal plane of contact of bicycle wheels with soil.

According to a preferred embodiment of the object of the present invention, the slant of each of both of said cited axes, to said vertical axis, is the same.

Furthermore, according to a still more preferred embodiment, the angle between each of said cited axes relatively to said vertical axis, is of 300. It will be clear that in both of above said preferred embodiments, the vertical axis running through the crossing point of both cited sliding axes is bisector of the angle they form to each other.

Furthermore, according to a very much preferred embodiment of the frame according to the present invention, the crossing point of both handle-bar stem and seat post sliding axes coincides with the crank axle.

Characteristics and advantages of the present invention will be clearer and more evident from the following disclosure supplied for merely exemplifying, non-limitative purposes, and which is based on the accompaning drawings.

The accompanying drawings show:
-- Figure 1 shows a side elevation view of a bicycle frame provided with the structural features according to the present invention;
-- Figure 2 shows a larger-scale side elevation, cross sectional view of the upper front portion of a bicycle frame according to a preferred embodiment according to the present invention.

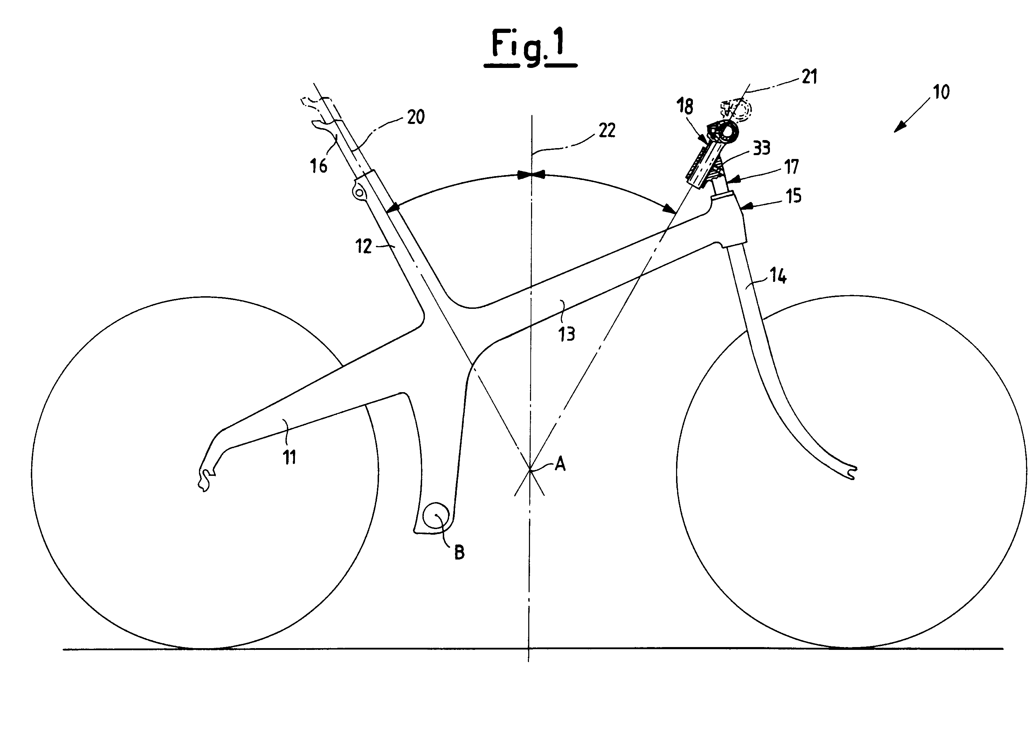

Referring to Figure 1, a frame for bicycles is generally indicated with (10). It consists of a seat tube (12), an oblique tube (13), a pair of forks, to wit, a rear fork (11) and a front fork (14), and a head tube (15).

Sliding according to an axis indicated with (20), relatively to the seat tube (12), a seat post (16) is provided, and inside the head tube (15), a handle-bar carrying support (17) is installed. With the handle-bar carrying support (17) the handle-bar stem (18) is slidingly and removably coupled, and can be shifted along a sliding axis indicated with (21).

In Figure 1, with the letter "B", the point is furthermore indicated at which the crankset of the bicycle (not shown in figure) is hinged, and with the letter "A", the point is indicated at which both axes (20) and (21) converge. Through "A" an axis (22) is drawn, which is bisector of the angle formed by axes (20) and (21).

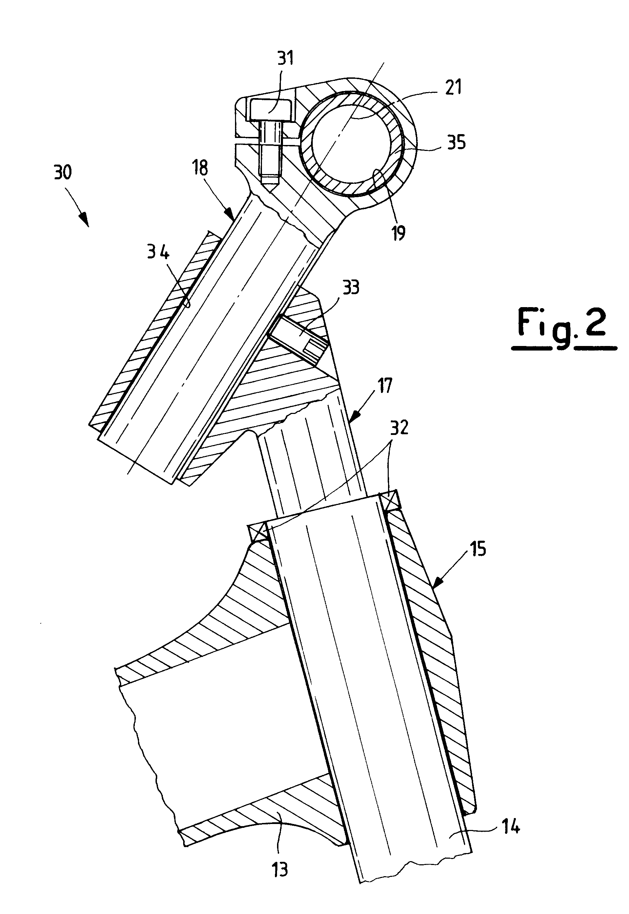

In Figure 2, a handle-bar supporting assembly [generally indicated with (30)], and namely, an embodiment thereof according to the present invention, is illustrated. The shared elements with Figure 1 are indicated here with the same reference numerals as used in Figure 1.

With (18) a handle-bar stem is indicated, which is integrally fastened by means of a so-said "fastening grub screw" (33) to the handle-bar carrying support (17). When it is released from the constraint applied by the grub screw (33), said handle-bar stem (18) can freely slide inside a bore (34) provided in above said handle-bar carrying support (17). The sliding direction coincides with axis (21). In such a way, the fastening grub screw acts as an adjustment element, which makes it possible the handle-bar stem (18) position to be adjusted relatively to the position of the handle-bar carrying support (17); and as a fastening element. For example, the handle-bar stem (18) can be given, e.g., a cylindrical shape with circular cross-section or, according to a preferred embodiment thereof, a cylindrical shape with an oval cross-section. The handle-bar stem (18) is provided with a circular- cross-section bore (19) inside which the handle-bar (35) is installed and fastened by means of a screw (31). The handle-bar carrying support (17) is supp- ported on the head tube (15) by means of suitable bearings (32).

The contrivance of arranging the relative motion directions of the seat, on the one hand; and of the handle-bar, on the other hand, relatively to the residual portion of frame, in opposite directions, makes it possible the following effect to be accomplished.

A vertical movement, in the same direction, of seat and handle-bar, causes a relative shift of both said elements in horizontal direction to take place, thus causing the value of their mutual distance to change, and namely, consistently with the change in distance from crankset, of anyone of both said components. This effect results into an immediate advantage: the position of two bicyclists of different tallness on the seat, on a same frame, once that the level from soil (i.e., from crankset) of seat and handle-bar is correctly adjusted, will be the same. In fact, whilst, according to the prior art, when, e.g., both the seat and the handle-bar are lifted up in order to allow a bicycle to be used by a taller bicyclist than the bicyclist who last used said bicycle, inasmuch as the distance between seat and handle-bar does not increase, the taller bicyclist must take a more folded position, with said bicyclist holding his back straighter, and therefore taking a no longer optimal position; with a bicycle having a frame according to the present invention, the proper position can be always found by means of a suitable adjustment in seat and handle-bar positions.

In particular, a preferred embodiment of the present invention consists in having same slant angles to the vertical reference axis. This makes it possible the barycentre of the bicyclist on bicycle seat to lay, after a whatever level adjustment, always on a same vertical axis.

A frame according to the present invention can be of both monocoque and multicoque types. The difference between these structure types consists in that whilst in the case of monocoque frame the maufacturing process practically consists of one single step, preferably a pressing or moulding step, in the case of the multicoque frame, the single components which compose it are separately manufactured and then assembled.

Preferably, in this second embodiment, the single frame components are produced from tubes which are cut and then suitably welded or assembled according to any suitable routes.

The frame according to the present invention can be constituted by a metal material, e.g., light, aluminum-based alloys, or composite material such as, e.g., carbon fibre or kevlar reinforced composites.

An essential advantage of the frame according to the present invention is that with a same frame bicycles can be manufactured and offered to purchasers, which are suitable for a very large number of prospects. This results in a sharp decrease in costs, because the number of frames to be manufactured in order to cover the whole range of possible users is considerably decreased. This "standardization" makes it possible, for example, the number of moulds, equipment pieces, production lines, variety of accessory elements, and so forth, to be reduced, positively mirroring on production costs, like all scale savings.

The so manufactured frame is immediately adaptable to each single user by means of a simple adjustment of seat and handle-bar level. Furthermore, the optimal weight distribution can be accomplished in any cases, thanks to the direction of the barycentre being kept constant when different bicyclists use the bicycle.

## Claims

1. Two-wheel bicycle frame with stardardized configuration with which a seat post and a handle-bar stem are slidingly and removably coupled, according to relevant sliding axes and, through an axle, a crankset is coupled, characterized in that the sliding axis of the seat tube relatively to the frame, and the sliding axis of the handle-bar stem relatively to the frame result to be slanting in opposite directions relatively to each other, relatively to a perpendicular axis to the normal plane of contact of bicycle wheels with soil.

2. Frame for two-wheel bicycle according to claim 1, characterized in that both sliding axes form a same angle to said perpendicular axes.

3. Frame for two-wheel bicycle according to claim 2, characterized in that said same angle is of 30 _{°} .

4. Frame for two-wheel bicycle according to any one of claims from 1 to 3, characterized in that the crossing point of both said sliding axes coincides with the point at which said crank axle is linked to the frame.

5. Frame for two-wheel bicycle according to any one of claims from 1 to 4, characterized in that the handle-bar is assembled on a handle-bar stem, which is slidingly inserted inside a handle-bar support.

6. Frame for two-wheel bicycle according to claim 5, characterized in that between the handle-bar stem and the handle-bar carrying support, mutual position adjustment and fastening elements are provided.

7. Frame for two-wheel bicycle according to claim 6, characterized in that said handle-bar carrying support has a cylindrical shape with a main development axis, provided with a slanting bore relatively to said main development axis.

8. Frame for two-wheel bicycle according to claim 6, characterized in that said handle-bar carrying support has an oval shape.

9. Frame for two-wheel bicycle according to claim 8, characterized in that said mutual position adjustment and fastening elements comprise a so-said "fastening grub screw" extending towards that slanting bore.

10. Frame for two-wheel bicycle according to any one of claims from 1 to 9, characterized in that said frame is a monocoque frame.

11. Frame for two-wheel bicycle according to any one of claims from 1 to 9, characterized in that said frame is a multicoque frame.

12. Frame for two-wheel bicycle according to any one of claims from 1 to 11, characterized in that said frame is constituted by a metal material.

13. Frame for two-wheel bicycle according to any one of claims from 1 to 11, characterized in that said frame is constituted by a composit material.
